# EUROPÄISCHE PATENTANMELDUNG

(11) **EP 1 801 284 A1**
(43) Veröffentlichungstag der Anmeldung: **27.06.2007**
(21) Anmeldenummer: 06023175.0
(22) Anmeldetag: 08.11.2006
(51) Int. Cl.: D21B 1/32

(54) **Verfahren zum Erzeugen einer Fasermischung für eine Papiermaschine**

(30) Priorität: 21.12.2005 DE 102005061068
(71) Anmelder: Voith Patent GmbH, 89522 Heidenheim (DE)
(72) Erfinder: Dölling, Fabian, 40668 Meerbusch (DE); Wiemer, Peter, Dr., 41532 Kerschenbroich (DE); Kurtz, Rüdiger, Dr., 89522 Heidenheim (DE); Beckers, Ralf, 47906 Kempen (DE); Rheims, Jörg Dr., 47803 Krefeld (DE)

(57) **Zusammenfassung**

Die Erfindung betrifft ein Verfahren zum Erzeugen einer Fasermischung für eine Papiermaschine aus einem Rohstoff zur Papiererzeugung, insbesondere aus einem Altpapiergemenge.

Aus dem Rohstoff (1), insbesondere dem Altpapiergemenge, wird in wenigstens einer ersten Aufbereitungsstufe mittels einer Sortieranlage (10), Cleaneranlage (11), Flotationsanlage (12) oder Waschanlage ein Abfallanteil (5), umfassend Fasern, abgesondert, wobei die Anzahl der Aufbereitungsstufen so gewählt wird, dass ein Abfallanteil (5) am Ende aller Aufbereitungsstufen erzeugt wird, welcher im Vergleich zu einer Aufbereitung mit höherer Aufbereitungsstufenanzahl einen höheren Faseranteil aufweist. Dieser Abfallanteil wird zur Erzeugung von thermischer oder elektrischer Energie verwendet, welche der oder den ersten Aufbereitungsstufen oder der Papiermaschine und/oder einer anschließenden Papierveredelung zugeführt wird.

## Beschreibung

Die Erfindung betrifft ein Verfahren zum Erzeugen einer Fasermischung für eine Papiermaschine aus einem Rohstoff zur Papiererzeugung, insbesondere aus einem Altpapiergemenge.

Die Erzeugung einer Fasermischung für eine Papiermaschine ist im Laufe der Jahrzehnte immer weiter perfektioniert worden, so dass es heutzutage möglich ist, nahezu sämtliche Fasern aus einem Rohstoff zur Papiererzeugung, insbesondere aus einem Altpapiergemenge, herauszutrennen und einer Papiermaschine zuzuführen. Hierzu ist die Stoffaufbereitung sehr aufwendig gestaltet, und eine Vielzahl von Aufbereitungsstufen mit gleichartigen Aufbereitungsanlagen, wie Sortieranlagen, Cleaneranlagen, Flotationsanlagen und Waschanlagen werden hintereinander geschaltet, um auch noch den "letzten Rest" der Fasern aus dem Rohstoff zu gewinnen und der Papiermaschine zuzuführen. Sortieranlagen und Waschanlagen arbeiten mit Sieben, Flotationsanlagen mit Schaumbildung zur Abtrennung feiner Stoffe und Cleaneranlagen mit Hydrozyklonen. Die Hintereinanderschaltung in mehrere Aufbereitungsstufen bedeutet in diesem Zusammenhang, dass in einer ersten Aufbereitungsstufe der Rohstoff beispielsweise durch eine Flotationsanlage geführt wird, welche diesen Rohstoff in zwei Anteile aufteilt, nämlich den sogenannten Gutstoff und den Reject, wobei der letztere im Rahmen der vorliegenden Erfindung allgemein als Abfallanteil bezeichnet wird. Dieser wird in einer zweiten Stufe durch eine zweite Aufbereitungsanlage zumeist desselben Typs, im genannten Beispiel wieder eine Flotationsanlage, erneut aufbereitet, so dass aus dem Abfallanteil wieder ein Gutstoffanteil gewonnen wird, der in der Regel mit dem Gutstoff der ersten Aufbereitungsstufe zusammengeführt und gemeinsam der Papiermaschine zugeführt werden kann. Der Abfallanteil der zweiten Stufe kann in weiteren nachgeschalteten Aufbereitungsstufen wieder derselben oder auch einer andersartigen Behandlung unterzogen werden, um so die noch enthaltenen Fasern zu extrahieren und als Gutstoff ebenso der Papiermaschine zuzuführen.

Heutige Aufbereitungsanlagen mit einer Vielzahl von Aufbereitungsstufen ermöglichen somit, dass der Abfallanteil der letzten Stufe einen Faserstoffanteil von weniger als 5 % aufweist, weil die übrigen Fasern als Gutstoff zuvor durch die hochentwickelte Aufbereitungstechnik aus dem Rohstoff extrahiert wurden.

Die Offenlegungsschrift DE 10 2004 006 516 A1 schlägt vor, den bei der Herstellung und/oder Veredelung einer Faserstoffbahn anfallenden Abfallanteil zur Erzeugung von Prozesswärme und/oder elektrischer Energie zu verwenden, indem aus den anfallenden Abfallprodukten ein Gas mit einem möglichst hohen Wasserstoffanteil erzeugt wird.

Somit konnte man bisher davon ausgehen, dass die Ausnutzung des Rohstoffes zur Papiererzeugung als optimal anzusehen ist, wenigstens solange bis weitere technische Entwicklungen ermöglichen, noch mehr Fasern aus dem vorhandenen Rohstoff zu extrahieren, so dass der Abfallanteil noch faserärmer ist.

Der Erfindung liegt die Aufgabe zugrunde, ein Verfahren zum Erzeugen einer Fasermischung für eine Papiermaschine aus einem Rohstoff zur Papiererzeugung, insbesondere aus einem Altpapiergemenge, darzustellen, welches wenigstens aus wirtschaftlicher Sicht gegenüber den bekannten Verfahren verbessert ist und zugleich den zugeführten Rohstoff im Hinblick auf die Einsparung natürlicher Ressourcen vollständig oder weitgehend bei der Stoffaufbereitung, bei der Papiererzeugung auf der Papiermaschine und/oder einer anschließenden Papierveredelung nutzt.

Die erfindungsgemäße Aufgabe wird durch ein Verfahren mit den Merkmalen von Anspruch 1 gelöst. Die abhängigen Ansprüche beschreiben vorteilhafte und besonders zweckmäßige Ausgestaltungen der Erfindung.

Die Erfindung beruht auf der Erkenntnis, dass die technische Entwicklung der letzten Jahrzehnte zwar zu einer maximalen Faserstoffausbeute aus dem zugeführten Rohstoff zur Papiererzeugung geführt hat, jedoch der technische und finanzielle Aufwand für diese Maximierung inzwischen erheblich ist, und insbesondere die Kosten zum Extrahieren des letzten rückgewinnbaren Faserstoffanteils aus dem Abfallanteil hinter mehreren Aufbereitungsstufen exponentiell ansteigen. Dabei wird hier unter Faserstoff die Gesamtheit des organischen Zellstoffes verstanden, also Langfasern, Kurzfasern und Faserfeinstoff (Faserbruchstücke).

Die Erfindung sieht daher vor, den aufbereiteten Anteil des Rohstoffs zur Papiererzeugung im Vergleich zu den bekannten Verfahren zu vermindern und damit den nicht aufbereiteten Anteil, das heißt den Abfallanteil zu vergrößern, und diesen vergrößerten nicht aufbereiteten Anteil zur Erzeugung thermischer und/oder elektrischer Energie zu nutzen, die wiederum in einer der Aufbereitungsstufen, der Papiermaschine und/oder einer anschließenden Papierveredelung genutzt wird.

Die Erfindung geht gegenüber dem aktuellen Stand der Technik somit zunächst einen Schritt zurück, was das technische mögliche Extrahieren von Fasermaterial aus dem Rohstoff zur Papiererzeugung betrifft und nutzt gezielt nicht die technischen Möglichkeiten, um den "letzten" Faserstoffanteil aus dem Rohstoff zu extrahieren und nur den dann noch verbleibenden Abfallanteil zur Energieerzeugung zu verwerten. Der Anteil der in Produktionsanlagen nicht mehr zurückgewinnbaren Fasern richtet sich nach Rohstoff und Qualitätsanforderungen. So hat eine auf Altpapierbasis arbeitende Zeitungspapierproduktion, bei der eine Flotation durchgeführt wird, einen Faserstoffverlust von ca. 3 bis 7 % und bei der Produktion von Tissuepapier ca. 10 bis 20 %, bezogen auf den Feststoff in der zugeführten Suspension. Dagegen wird mit dem neuen Verfahren gezielt ein Abfallanteil gebildet, welcher im Vergleich zum Stand der Technik einen deutlich höheren Faserstoffanteil aufweist, insbesondere von mehr als 8 % , in Sonderfällen bis zu 50 %.

Bei einer Cleaneranlage oder einer Sortieranlage sind die Faserstoffverluste bedeutend kleiner als bei der Flotation. Sie liegen (jede Anlage für sich betrachtet) bei ca. 1 % oder darunter. Da solche Anlagen oft aufwändig und rejektbezogen mehrstufig aufgebaut sind, lassen sich auch hier mit dem neuen Verfahren ökonomische Verbesserungen erzielen.

Der Abfallanteil wird zur Erzeugung von thermischer und/oder elektrischer Energie verwendet, welche dann, insbesondere unmittelbar oder auch mittelbar, einer oder mehreren Aufbereitungsstufen, der Papiermaschine oder einer anschließenden Papierveredelung zugeführt und dort genutzt wird. Der erhöhte Anteil von organischen Stoffen im Abfall verbessert dessen Brennwert.

Die Erfinder haben nämlich erkannt, dass es wirtschaftlich sinnvoller ist, auf die letzten Prozentpunkte einer Ausbeute des Rohstoffs zu verzichten und stattdessen die so anfallende (im Vergleich zum Stand der Technik größere) Biomasse des Abfallanteils thermisch zu nutzen, auch wenn sie noch aufbereitungsfähige Fasern enthält. Dies ist insbesondere im Rahmen der Papiererzeugung gut möglich, weil dort eben thermische Energie zum Beispiel zur Trocknung des Papiers ohnehin benötigt wird, und hierfür die Energie aus der thermischen Nutzung des Abfallanteils verwendet werden kann.

Ein weiterer Vorteil der erfindungsgemäßen Lösung besteht darin, dass in dem anschließenden Papierherstellungsprozess die besser geeigneten Fasern des Rohstoffs zur Papiererzeugung verwendet werden können. Je nach Art des Aufbereitungsverfahrens wird in den nacheinander folgenden Aufbereitungsstufen nicht nur der eigentliche Abfall aufkonzentriert, sondern im darin enthaltenen Fasermaterial oft auch eine bestimmte Faserart. So findet sich z.B. im Rejekt von Flotationsanlagen ein erhöhter Anteil von Kurzfasern und Faserfeinstoff, die für bestimmte Papierfestigkeiten ungünstig sind. Auch kann das oftmalige Behandeln in Trennstufen die als letzte zurück gewonnenen Fasern unter ungünstigen Bedingungen verunreinigen oder dauerhaft schädigen. Im Stand der Technik wurde auch ein gemäß der Erfindung thermisch genutzter Anteil des Rohstoffs noch zur Papierherstellung verwendet. Dieser minderwertige Anteil kann gemäß der Erfindung durch andere höherwertige Fasern des zur Papiererzeugung zugeführten Rohstoffes ersetzt werden.

Die thermische Verwertung der als Abfall ausgeschleusten Anteile verbessert zudem den energetischen Wirkungsgrad der Gesamtanlage.

Die möglicherweise anfallenden Mehrkosten aufgrund einer gegebenenfalls notwendigen größeren Rohstoffzufuhr können durch beträchtliche Minderkosten in der Investition und beim Betrieb der Aufbereitungsanlagen gedeckt werden. Das aus dem im Vergleich zum Stand der Technik weniger aufbereiteten Rohstoff erzeugte Papier weist eine höhere Qualität auf, insbesondere verbesserte optische Eigenschaften sowie eine größere Festigkeit. Alternativ kann auch bei im Vergleich zum Stand der Technik gleichbleibenden optischen und mechanischen Eigenschaften die Flächenmasse ("Flächengewicht") reduziert werden, was entsprechende ökologische und ökonomische Vorteile mit sich bringt.

Gemäß dem erfindungsgemäßen Verfahren wird aus dem Rohstoff zur Papiererzeugung, insbesondere aus einem Altpapiergemenge, in wenigstens einer ersten Aufbereitungsstufe einer Sortieranlage, Deinkinganlage, Waschanlage oder einer Cleaneranlage ein faserhaltiger Abfallanteil ausgesondert, wobei die Fasern des Abfallanteils in wenigstens einer der ersten Aufbereitungsstufen nachgeschalteten weiteren Aufbereitungsstufe dadurch aus dem Abfallanteil gewonnen werden, dass die weitere Aufbereitungsstufe mit dem Abfallanteil aus der ersten Aufbereitungsstufe beschickt wird. Diese umfasst vorzugsweise, aber nicht unbedingt, dieselbe Anlage wie die erste Aufbereitungsstufe.

Gemäß einer anderen Ausführung der Erfindung durchläuft der Abfallanteil aus der ersten Aufbereitungsstufe jedoch keine weitere Aufbereitungsstufe, zumindest keine solche, welche dieselbe Anlagenart wie die erste Aufbereitungsstufe umfasst, das heißt der Rohstoff zur Papiererzeugung wird maximal durch eine jeweils einstufige Sortieranlage, Deinkinganlage und/oder Cleaneranlage geführt. Insbesondere ist es möglich, den Abfallanteil aus der ersten Aufbereitungsstufe gar nicht weiter aufzubereiten, sondern unmittelbar insgesamt oder Teile desselben zur Energieerzeugung zu verwenden, welche Energie dann in der Papierfabrik, insbesondere bei der Aufbereitung, in der Papiermaschine und/oder bei der Papierveredelung genutzt wird.

Dadurch, dass gemäß der Erfindung insgesamt jeweils nur eine geringere Anzahl von Aufbereitungsstufen zum Extrahieren von Fasern aus dem Rohstoff vorgesehen wird als dies bisher gemäß dem Stand der Technik üblich war, ist der Anteil von Fasern in dem Abfallanteil, welcher hinter den Aufbereitungsstufen übrig bleibt, größer. Dieser Abfallanteil aus den verschiedenen einstufigen Anlagen der Aufbereitung wird zur Erzeugung von thermischer und/oder elektrischer Energie verwendet, die, wie dargestellt, einer oder mehrerer der Aufbereitungsanlagen und/oder der Papiermaschine und/oder einer anschließenden Papierveredelung zugeführt und dort genutzt wird.

Ohne Beschränkung auf eine einzige gleichartige Aufbereitungsstufe, das heißt ohne die Beschränkung darauf, dass in einer rejektseitigen Hintereinanderschaltung maximal eine einzige Sortieranlage, Deinkinganlage und Cleaneranlage vorgesehen ist, ist gemäß einer alternativen Ausführung das erfindungsgemäße Verfahren dadurch gekennzeichnet, dass der Abfallanteil hinter der letzten Aufbereitungsstufe einen Faseranteil von mehr als 8 % aufweist. Die letzte Aufbereitungsstufe im Hinblick auf die Bewegungsrichtung des Abfalls bezieht sich dabei auf die mögliche Hintereinanderschaltung mehrerer Aufbereitungsstufen, beispielsweise einer ersten, zweiten und dritten, wobei der gegebenenfalls vorbehandelte (z.B. sortierte) Rohstoff zur Papiererzeugung zunächst der ersten Aufbereitungsstufe zugeführt wird, der Abfallanteil aus dieser ersten Aufbereitungsstufe der zweiten Aufbereitungsstufe zugeführt wird, der Abfallanteil aus zweiten Aufbereitungsstufe der dritten Aufbereitungsstufe zugeführt wird, und schließlich der Abfallanteil der dritten Aufbereitungsstufe, welcher bei dem genannten Beispiel der Abfallanteil "hinter der letzten Aufbereitungsstufe" ist, zur Erzeugung von thermischer und/oder elektrischer Energie genutzt wird. Die Nummerierung der Aufbereitungsstufen im Rahmen der vorliegenden Erfindungsbeschreibung bezieht sich demnach nicht auf den Weg des Gutstoffes, auf welchem in der Regel ebenfalls mehrere Aufbereitungsanlagen hintereinander geschaltet werden, beispielsweise, wie später mit Bezug auf die Figur beschrieben wird, eine Sortieranlage, eine Cleaneranlage und eine Deinkinganlage. Diese Aufbereitungsanlagen auf dem Weg des Gutstoffanteils, welche nicht mit einem Abfallanteil beschickt werden, werden vorliegend allesamt als erste Aufbereitungsstufe bezeichnet.

Insbesondere wird der zur thermischen oder elektrischen Energieerzeugung verwendete Abfallanteil aus der letzten Aufbereitungsstufe dazu verwendet, Brennstoffe, insbesondere Wasserstoff, Kohlenwasserstoffe wie Methan, Alkohol oder Methanol zu erzeugen, welche gegebenenfalls aufbereitet und anschließend an einer oder mehreren Stellen des Papieraufbereitungs-, -herstellungs- oder -veredelungsprozesses oxidiert beziehungsweise verbrannt werden. In der Biogasanlage können neben den nicht zur Papierherstellung verwendeten Fasern auch weitere biologische Abfälle zugefügt werden, wie beispielsweise Laub, Rinde oder dergleichen, die zum Beispiel bei der Rohstofferzeugung des Rohstoffes zur Papiererzeugung anfallen.

Die in der Biogasanlage gewonnenen Gase werden insbesondere in Brennstoffzellen zur Erzeugung von elektrischer Energie und/oder Prozesswärme verwendet.

Die aus dem Abfallanteil der letzten Stufen erzeugte Wärme kann unmittelbar oder mittelbar in dem Rohstoffaufbereitungs-, Papierherstellungs- oder Papierveredelungsprozess verwendet werden, insbesondere in Kombination mit katalytischer Verbrennung. Bei der katalytischen Verbrennung sind alle Wärmeübertragungsmechanismen möglich, wie Strahlung, Konvektion, direkte Wärmeübertragung oder indirekte Wärmeübertragung über zwischengeschaltete Wärmeträger (zum Beispiel Wasser oder Öl). Auch eine Kombination verschiedener Wärmeübertragungsmechanismen ist denkbar.

Die in den Aufbereitungsstufen, insbesondere ausschließlich ersten Aufbereitungsstufen gewonnene Fasermischung für eine Papiermaschine wird vorteilhaft unmittelbar, das heißt ohne weitere Behandlung und insbesondere ohne Zwischenlagerung, einer Papiermaschine zugeführt, in der Regel direkt dem Stoffauflauf derselben.

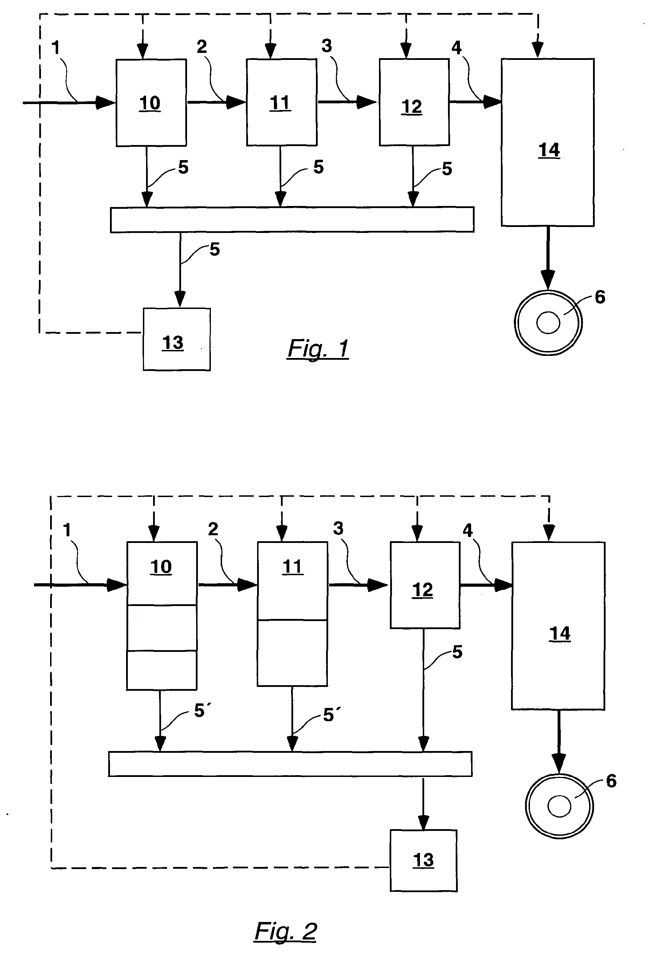

Die Figur 1 zeigt in einer schematischen Darstellung das erfindungsgemäße Verfahren und die Fig. 2 eine Variante des Verfahrens.

Ein Rohstoff zur Papiererzeugung 1, welcher insbesondere aus einem Altpapiergemenge besteht beziehungsweise ein solches umfasst, wird zunächst einer Sortieranlage 10 zugeführt. In dieser Sortieranlage 10 wird beispielsweise in einer einer Auflösetrommel für Altpapier nach geschalteten Sortiertrommel ein Gutstoffanteil 2 aus dem Rohstoff 1 gewonnen und der verbleibende Rest des Rohstoffs 1 als Abfallanteil 5 abgeführt. Die Auflösung kann auch durch Suspendieren in einem sogenannten Pulper erfolgen, welchem Wasser und gegebenenfalls Chemikalien zugeführt werden, um den Rohstoff 1 aufzuweichen und die Fasern in Wasser zu suspendieren. Die nachfolgende Sortieranlage kann dann aus Drucksortierern bestehen, in denen der bereits aufgelöste und in Suspension gebrachte Altpapierstoff mittels Sieben sortiert wird.

Der Gutstoffanteil 2 wird einer Cleaneranlage 11 zugeführt, beispielsweise einem Schwerteil-Cleaner oder Leichtschmutz-Cleaner. In dieser Cleaneranlage 11 wird die noch verschmutzte Faserstoffsuspension in einem Wirbel beschleunigt. Stoffe, die leichter als die Papiersuspension sind, transportiert der Wirbelstrom nach innen und schwerere Materialien nach außen. Der Abfallanteil 5 aus der Cleaneranlage wird, wie schematisch in der Figur 1 dargestellt ist, mit dem Abfallanteil aus der Sortieranlage 10 gemischt und weiter transportiert.

Eine Reihe nach geschalteter Siebe und Schlitze kann Stoffe wie Kleb- und Kunststoffreste entfernen. Der Gutstoff 3 aus der Cleaneranlage 11 wird nun einer Deinking-Anlage zugeführt, um Druckfarben und feine Störstoffe zu entfernen. Auch wenn solche Anlagen zur Entfernung von Druckfarben ("ink") entwickelt wurden, dienen sie heute zur Entfernung aller feinen Verunreinigungen, insbesondere auch Kleberpartikeln (stickies). Die Deinkinganlage kann beispielsweise als Flotationsanlage 12 ausgeführt sein, in welcher in einer einzigen oder in mehreren Flotationszellen dem Gutstoff 3 aus der Cleaner-Anlage 11 beziehungsweise allgemein der Papiermasse Wasser, z.B. Natronlauge und Seife, zugesetzt wird, und mit Luftblasen ein Schaum erzeugt wird, mit dem die Farbbestandteile an die Oberfläche treiben, wo sie abgeschöpft werden. Selbstverständlich können andere Deinking-Verfahren verwendet werden, beispielsweise das Wasch-Deinking, bei dem die Fasern auf mechanischem Wege von den ins Filtrat gehenden Verunreinigungen befreit werden.

Der Gutstoff 4 aus der Flotationsanlage 12 kann nun, gegebenenfalls nach einer weiteren Aufbereitung oder unmittelbar, der Papiermaschine 14 zugeführt werden, beispielsweise dem Stoffauflauf derselben, so dass aus dem Gutstoff 4 das Papier 6 erzeugt wird. Anschließend kann sich eine Papierveredelung anschließen (nicht dargestellt).

Der Abfallanteil 5 aus der Flotationsanlage 12 wird mit den Abfallanteilen 5 aus der Sortieranlage 10 und der Cleaner-Anlage 11 zusammengeführt und anschließend in einer Biogasanlage 13 zur Erzeugung wenigstens eines Brennstoffes verwendet. Dieser Brennstoff wird beispielsweise anschließend, insbesondere durch katalytische Verbrennung, verbrannt oder zur Erzeugung von elektrischer Energie in einer Brennstoffzelle oxidiert. Die aus der Verbrennung gewonnene thermische Energie kann entweder zur Erzeugung elektrischer Energie verwendet werden, beispielsweise in einem Gaskraftwerk, oder unmittelbar der Papiermaschine 14 oder einer der Aufbereitungsstufen für den Rohstoff 1, hier der Sortieranlage 10, der Cleaner-Anlage 11 oder der Flotationsanlage 12 zugeführt werden. Auch die elektrische Energie, welche durch eine Brennstoffzelle unmittelbar aus dem in der Biogasanlage erzeugten Brennstoff oder mittelbar über Verbrennung des in der Biogasanlage erzeugten Brennstoffes erzeugt wird, kann der Papiermaschine 14 beziehungsweise zum Betrieb der Produktionshalle mit der Papiermaschine 14 oder einer oder mehreren von den Aufbereitungsstufen, wie dargestellt, zugeführt und dort genutzt werden. Alternativ kann der Abfallanteil 5 konventionell zur Energiegewinnung verbrannt werden.

Gemäß der Beschreibung der vorliegenden Erfindung werden die gezeigten Aufbereitungsstufen mit der Sortieranlage 10, der Cleaner-Anlage 11 und der Flotationsanlage 12 als erste Aufbereitungsstufe bezeichnet, da sie die erste Aufbereitungsanlage einer bestimmten Art sind, welcher der Rohstoff 1 beziehungsweise der Gutstoffanteil 2 oder der Gutstoff 3 zugeführt wird.

In diesen ersten Aufbereitungsstufen wird jeweils ein Abfallanteil 5 produziert, welcher gemäß der in der Figur 1 dargestellten Ausführung keiner zweiten nachgeschalteten Aufbereitungsstufe zugeführt wird, sondern unmittelbar zur Erzeugung von thermischer und/oder elektrischer Energie beziehungsweise zur Erzeugung von Brennstoff in der Biogasanlage 13 verwendet wird. Gemäß dem Stand der Technik hingegen war es üblich, diese Abfallanteile 5 einer weiteren Aufbereitung zu unterziehen, um in dieser im Abfallanteil noch enthaltene Fasern zu extrahieren und als Gutstoff wieder der Papiermaschine zuzuführen. Gemäß Fig. 2 kann das Verfahrensziel auch erreicht werden, wenn nur einer der Aufbereitungsanlagen, in diesem Fall die dazu besonders geeignete Flotationsanlage 12, mit reduzierter Faserstoffgewinnung betrieben, also ein erhöhter Abfallanteil 5 gebildet wird. Die Sortieranlage 10 ist in diesem Fall dreistufig (rejektbezogen) und die Cleaneranlage 11 zweistufig. Somit sind deren Abfallanteile 5' mit höherem Aufwand von Faserstoff getrennt als im Beispiel gemäß Fig. 1

Gemäß einer Ausführung der Erfindung wird nicht der gesamte Abfallanteil 5 aus den verschiedenen Aufbereitungsanlagen der Biogasanlage 13 zugeführt, sondern in der Biogasanlage 13 nicht verwertbare Stoffe in dem Abfallanteil 5 können geeignet vorher ausgesondert werden.

## Patentansprüche

1. Verfahren zum Erzeugen einer Fasermischung (4) für eine Papiermaschine (14) aus einem Rohstoff (1) zur Papiererzeugung, insbesondere aus einem Altpapiergemenge, mit den folgenden Schritten:
aus dem Rohstoff (1), insbesondere dem Altpapiergemenge, wird in wenigstens einer Sortieranlage (10), Cleaneranlage (11), Flotationsanlage (12) oder Waschanlage oder einer Kombination dieser Anlagen, bei der der Gutstoff einer stromaufwärtigen Anlage zu einer stromabwärtigen Anlage geführt wird, ein faserhaltiger Abfallanteil (5), ausgesondert,
wobei die Fasern des Abfallanteils (5) der ersten Aufbereitungsstufe der Aufbereitungsanlage in einer der ersten Aufbereitungsstufe nach geschalteten zweiten Aufbereitungsstufe oder einer Mehrzahl von der ersten Aufbereitungsstufe nachgeschalteten Aufbereitungsstufen mittels jeweils wenigstens einer weiteren Sortieranlage, Cleaneranlage, Flotationsanlage oder Waschanlage aus dem Abfallanteil (5) gewinnbar sind,
**dadurch gekennzeichnet,**
**dass** die Anzahl der Aufbereitungsstufen der Aufbereitungsanlage oder Aufbereitungsanlagen maximal so hoch gewählt wird, dass dadurch ein Abfallanteil (5) am Ende aller Aufbereitungsstufen erzeugt wird, welcher im Vergleich zu einer Aufbereitung mit einer höheren Anzahl von Aufbereitungsstufen der Aufbereitungsanlagen einen höheren Faseranteil aufweist und dadurch,
**dass** dieser Abfallanteil (5) zur Erzeugung von thermischer oder elektrischer Energie verwendet wird, welche vollständig oder teilweise der zur Erzeugung der Fasermischung oder der Papiermaschine (14) oder einer anschließenden Papierveredelung zugeführt wird.

2. Verfahren nach Anspruch 1,
**dadurch gekennzeichnet,**
**dass** eine Flotationsanlage (12) verwendet wird.

3. Verfahren nach Anspruch 1 oder 2 für die Produktion von graphischem Papier oder Verpackungspapier,
**dadurch gekennzeichnet,**
**dass** der zur Erzeugung von thermischer oder elektrischer Energie verwendete Abfallanteil (5) einen Faserstoffgehalt von mehr als 8 % aufweist.

4. Verfahren nach Anspruch 3,
**dadurch gekennzeichnet,**
**dass** der zur Erzeugung von thermischer oder elektrischer Energie verwendete Abfallanteil (5) einen Faserstoffgehalt von mehr als 20 % aufweist.

5. Verfahren nach Anspruch 1 oder 2,
**dadurch gekennzeichnet,**
**dass** der zur Erzeugung von thermischer oder elektrischer Energie verwendete Abfallanteil (5) einen Faserstoffgehalt von mehr als 30 % aufweist.

6. Verfahren nach Anspruch 5,
**dadurch gekennzeichnet,**
**dass** der zur Erzeugung von thermischer oder elektrischer Energie verwendete Abfallanteil (5) einen Faserstoffgehalt von mehr als 50 % aufweist.

7. Verfahren nach einem der voran stehenden Ansprüche,
**dadurch gekennzeichnet,**
**dass** maximal eine einzige Aufbereitungsstufe bei Sortieranlage (10), Cleaneranlage (11), Flotationsanlage (12) oder Waschanlage verwendet wird.

8. Verfahren nach einem der voran stehenden Ansprüche,
**dadurch gekennzeichnet,**
**dass** aus dem zur Erzeugung von thermischer und/oder elektrischer Energie verwendeten Abfallanteil (5) in einer Biogasanlage (13) Brennstoffe, insbesondere Wasserstoff, Kohlenwasserstoffe, Methan, Alkohole oder Methanol, gewonnen werden, welche zur Erzeugung der thermischen und/oder elektrischen Energie oxidiert oder verbrannt werden.

9. Verfahren nach Anspruch 8,
**dadurch gekennzeichnet,**
**dass** dem Abfallanteil (5) weitere biologische Abfälle zugefügt werden.

10. Verfahren nach einem der Ansprüche 8 oder 9,
**dadurch gekennzeichnet,**
**dass** die bei der Verbrennung entstehende Wärme zumindest teilweise unmittelbar einer oder mehreren Aufbereitungsstufen, der Papiermaschine (14) und/oder der Papierveredelung zugeführt wird.

11. Verfahren nach einem der Ansprüche 8 oder 9,
**dadurch gekennzeichnet,**
**dass** die Brennstoffe in einer Brennstoffzelle zur Erzeugung von elektrischer Energie und/oder von Prozesswärme verwendet werden.

12. Verfahren nach einem der Ansprüche 8 bis 10,
**dadurch gekennzeichnet,**
**dass** die bei der Verbrennung entstehende Wärme zumindest teilweise in elektrische Energie umgewandelt und dass diese einer oder mehreren Aufbereitungsstufen, der Papiermaschine (14) und/oder der Papierveredelung zugeführt wird.
